# EUROPÄISCHE PATENTSCHRIFT

(11) **EP 1 016 814 B1**
(45) Veröffentlichungstag und Bekanntmachung des Hinweises auf die Patenterteilung: **07.01.2004**
(21) Anmeldenummer: 99121740.7
(22) Anmeldetag: 03.11.1999
(51) Int. Cl.: F16L 3/10, F16L 3/237, H02G 3/36, F16L 3/04

(54) **Klemmhalter für flexible Leitungen**
Locking clip for flexible lines
Agrafe de fixation pour lignes flexibles

(30) Priorität: 30.12.1998 DE 19860741
(43) Veröffentlichungstag der Anmeldung: 05.07.2000
(73) Patentinhaber: LINDAUER DORNIER GESELLSCHAFT M.B.H, 88129 Lindau (DE)
(72) Erfinder: Kerner, Horst, 88161 Lindenberg (DE); Arndt, Stephan, 88131 Lindau (DE); Schiller, Peter, 88131 Lindau (DE)

(56) Entgegenhaltungen:
- DE-C- 3 519 685
- DE-U- 1 844 454
- DE-U- 9 113 401
- GB-A- 884 124
- US-A- 2 926 213
- US-A- 4 214 723
- US-A- 5 271 588

## Beschreibung

Die Erfindung betrifft einen Klemmhalter für flexible Leitungen, insbesondere für stromführende Leitungen in Webmaschinen.

Klemmhalter oder Klemmen für flexible Leitungen sind allgemein bekannt.
Die DE-PS 692 152 betrifft eine Leitungsschelle mit einem Schellenunterteil und einem Schellenoberteil, welche Leitungsschelle zwei parallel laufende Leitungen zu klemmen vermag.
Die Klemmwirkung wird dadurch erreicht, dass ein am Schellenoberteil vorhandener, hülsenartiger, geschlitzter Fortsatz in eine Aussparung des Schellenunterteils eingreift und in der Aussparung durch eine von einer Schraube anziehbaren Keilmutter fest klemmbar ist. Eine derartige Leitungsschelle erfordert neben dem Herstellungsaufwand des Schellenoberteils die die Klemmwirkung erzeugenden Mittel (Schraube und Keilmutter). Außerdem erfordert das Montieren und Demontieren der Leitungsschelle einen vergleichweise hohen Zeitaufwand.

Bekannt ist aus dem DE-GM 18 44 454 ferner eine Klemme zur Halterung von starren oder biegsamen stangen- oder rohrartigen Teilen an Flach- oder L-Profilen. Die Klemmung des rohrartigen Teils erfolgt auch hier mittels einer auf eine Scheibe wirkenden Schraube. Der Gegenstand des DE-GM besitzt die gleichen Nachteile, wie die Leitungsschelle der vorgenannten DE-PS 692 152, mehr noch, die Klemmscheibe nach dem DE-GM 18 44 454 vermag nur ein einziges rohrartiges Teil zu klemmen.

Aus dem DE-GM 16 55 715 ist eine Drahtschelle bekannt, bestehend aus einer Grundplatte und einem Klemmbügel.
Zum Klemmen mehrerer Drähte auf der Grundplatte ist der Klemmbügel unter mäßigem Anschraubdruck mit der Grundplatte verbunden. Der Gegenstand des DE-GM 16 55 715 verzichtet also nicht auf das Verschrauben des Klemmbügels mit der Grundplatte; insofern vermeidet diese Lösung ein relativ zeitaufwändiges Montieren des Klemmbügels nicht.

In Webmaschinen z.B. müssen bei einem Artikelwechsel oder zu Wartungsarbeiten flexible Leitungen so verlegt und dabei gehalten werden, dass diese den speziellen Bedingungen an der Webmaschine gerecht werden.
Bei einer Änderung der Einziehbreite (Gewebebreite) z.B., müssen die stromführenden Leitungen eines ortsveränderlichen Schussfadenwächters bei dessen Positionsänderung nachgeführt werden und zwar so, dass die Verlegesystematik der Leitungen erhalten bleibt. Das Nachführen der Leitungen erfordert dabei einen nicht unerheblichen Aufwand für das Lösen der Leitungen aus ihrer Verlegeposition und für das erneute Befestigen.

Vor diesem Hintergrund ist es Aufgabe der Erfindung, einen Klemmhalter für flexible Leitungen zu schaffen, der ohne zeitaufwändige Montagearbeiten ein Nachführen von Leitungen zu ortsveränderlichen Baueinheiten einer Maschine, insbesondere zu Baueinheiten in einer Webmaschine, ermöglicht.

Die Aufgabe wird erfindungsgemäß durch die Merkmale des Patentanspruchs 1 gelöst.

Danach ist erfindungsgemäß vorgesehen, einen Klemmhalter für flexible Leitungen lüftbar zu gestalten, indem ein ortsveränderlich montierbarer oder ortsfester Leitungshalter mit wenigstens einer eine Leitung fixierenden Vorkehrung in Art einer in Verlegerichtung der Leitung weisenden Nut oder Sicke ausgerüstet ist und ein die betreffende Leitung in der Vorkehrung klemmendes Mittel über ein an sich bekanntes, elastisches und längendehnbares Spannmittel, das eine halsartige Querschnittsverengung besitzt, mit dem Leitungshalter verbunden ist.

Die Verbindung des klemmenden Mittels mit dem Leitungshalter erfolgt dabei dadurch, dass der Leitungshalter und das klemmende Mittel wenigstens jeweils einen zueinander fluchtenden Durchgang besitzen, in welche Durchgänge das elastisch längendehnbare Spannmittel derart eingezogen ist, dass der Leitungshalter und das die wenigstens eine Leitung klemmende Mittel gegeneinander elastisch verspannt sind.
Von Vorteil ist dabei, dass nicht nur das Verbinden des klemmenden Mittels mit dem Leitungshalter auf rasche und einfach Weise dadurch erfolgt, dass das elastische Spannmittel in den Durchgang des klemmenden Mittels und in den Durchgang des Leitungshalters eingezogen wird, sondern auch die Demontage ist äußerst einfach, da es genügt, mittels eines Messers das Spannmittel im Spalt zwischen Leitungshalter und klemmenden Mittel durchzutrennen.
Das verwendete Spannmittel ist aus der DE 35 19 685 C1 bekannt.
Ein weiterer Vorteil ist, dass notwendig werdende Änderungen in der Leitungsverlegung ohne Werkzeuge, ohne einen großen manuellen Kraftaufwand und ohne den Leitungshalter mit dem klemmenden Mittel demontieren und wieder montieren zu müssen, ausgeführt werden können.

Bei Änderungen in der Leitungsverlegung ist also lediglich das klemmende Mittel manuell entgegen der Spannkraft des Spannmittels vom Leitungshalter zu ziehen, um die Leitung in ihrer Lage zu verändern und nachfolgend ist die Zugbewegung zu beenden.
Weitere Vorteile und Merkmale der Erfindung gehen aus der Beschreibung und den Unteransprüchen hervor.

Ausführungsbeispiele der Erfindung sind den Zeichnungen zu entnehmen.

Es zeigen:
- Figur 1: den Klemmhalter in Explosivdarstellung,
- Figur 2: den Klemmhalter mit zwei geklemmten Leitungen,
- Figur 3: eine gegenüber den Figuren 1 und 2 vereinfachte Ausführungsform des Klemmhalters und
- Figur 4: eine gegenüber der Figur 3 geänderte Ausführungsform des klemmenden Mittels.

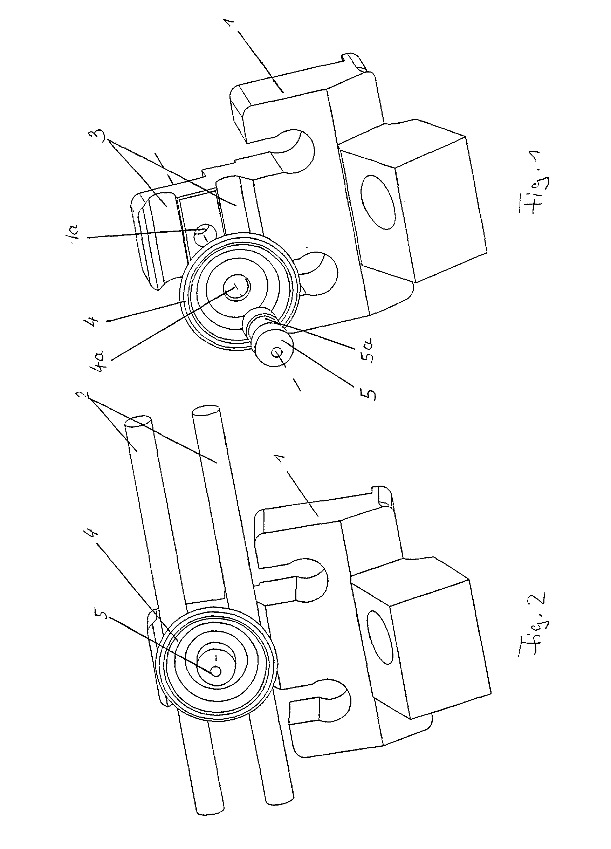

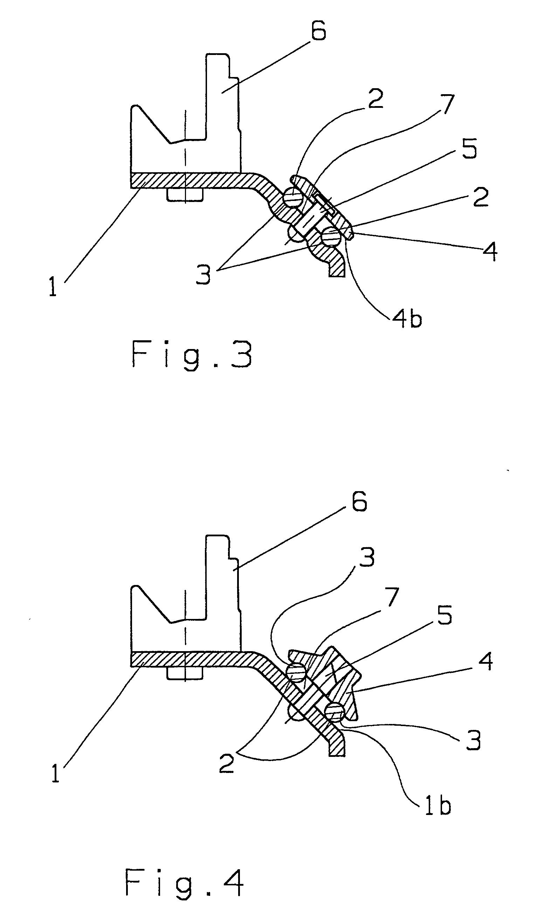

In den Figuren 1 und 2 ist der Leitungshalter 1, der eine beliebige Gestaltung aufweisen kann, gleichzeitig der Halter einer oder mehrerer nicht dargestellter Stafettendüsen, wie diese in Luftdüsenwebmaschinen zum Zwecke des Schussfadeneintrags in den Schussfadeneintragskanal eines Webblattes erforderlich sind.
Die erfindungsgemäße Lösung ist jedoch nicht ausschließlich an Webmaschinen verwendbar, sondern vielmehr überall dort, wo ein Klemm-Verschrauben von Leitungen durch Klemmen ohne Verschrauben ersetzbar ist.
Der Leitungshalter 1 besitzt Vorkehrungen 3 in Gestalt von zwei einander parallel verlaufenden Aufnahmemitteln für die Leitungen 2. Zwischen den Vorkehrungen 3 befindet sich ein Durchgang 1a, der vorzugsweise als Bohrung ausgebildet ist.
Ein Mittel 4, z.B. ein tellerartig ausgebildetes Element, besitzt zentrisch einen Durchgang 4a, der ebenfalls vorzugsweise als Bohrung ausgebildet ist. Die Unterseite des Mittels 4, also die den Vorkehrungen 3 zugewandte Seite, ist ebenflächig ausgebildet oder wie in Figur 3 gezeigt, gleichermaßen mit Vorkehrungen 3 versehen, wie sie der Leitungshalter 1 aufweist. Der Leitungshalter 1 und das Klemmmittel 4 sind über den entsprechenden Durchgang 1a bzw. 4a lüftbar durch das aus der DE-PS 35 19 685 bekannte Spannmittel 5 verbunden, wie in den Figuren 2 bis 4 gezeigt.

Soll eine in den Vorkehrungen 3 aufzunehmende Leitung 2 in dem Leitungshalter 1 geklemmt werden, so ist lediglich das Mittel 4 entgegen der Spannkraft des Spannmittels 5 vom Leitungshalter 1 abzuheben, so dann die Leitungen einzuführen oder bereits darin aufgenommene Leitungen, entsprechend dem Wunsch der Leitungsverlegung zu positionieren. Anschließend wird das Mittel 4 wieder in Klemmwirkung mit den Leitungen 2 gebracht.

In den Figuren 3 und 4 sind vorteilhaft ausgebildete Leitungshalter 1 dargestellt, die nicht gleichzeitig als Stafettendüsenhalter einer Luftdüsenwebmaschine ausgebildet sind.
Der Leitungshalter ist hier als ein besonders gestaltetes Blechteil ausgebildet, das mit der sogenannten Blattleiste 6 einer Lufidüsenwebmaschine verbunden ist.
Auch das Spannmittel 4 kann eine den Einsatzbedingungen entsprechende Gestaltung aufweisen, wie in Figur 4 dargestellt.

### Zeichnungs-Legende

- 01: Leitungshalter
- 01a: Durchgang
- 01b: Klemmfläche
- 02: Leitung
- 03: Vorkehrung
- 04: Mittel
- 04a: Durchgang
- 04b: Klemmfläche
- 05: Spannmittel
- 05a: Querschnittsverengung
- 06: Blattleiste

## Patentansprüche

1. Klemmhalter für flexible Leitungen, insbesondere stromführende Leitungen, bestehend aus einem Leitungshalter (1) mit wenigstens einer eine Leitung (2) fixierenden Vorkehrung (3) und aus einem die Leitung (2) in der Vorkehrung (3) klemmenden Mittel (4), wobei das Mittel (4) und der Leitungshalter (1) wenigstens jeweils einen zueinander fluchtenden Durchgang (1a;4a) besitzt, **dadurch gekennzeichnet, dass** in die Durchgänge (1a,4a) ein an sich bekanntes, elastisches, längendehnbares Spannmittel (5) mit einer halsartigen Querschnittsverengung (5a) gezogen ist, das den Leitungshalter (1) mit dem Mittel (4) lüftbar verbindet.

2. Klemmhalter nach Anspruch 1, **dadurch gekennzeichnet, dass** die Vorkehrung (3) eine in Verlegerichtung der Leitung (2) weisende Nut ist.

3. Klemmhalter nach Anspruch 1, **dadurch gekennzeichnet, dass** das Mittel (4) ein tellerartig ausgebildetes Element ist.

4. Klemmhalter nach Anspruch 1, **dadurch gekennzeichnet, dass** das Mittel (4) ein rechteckig ausgebildetes Element ist, das eine gegen Verdrehung ausgebildete Lasche besitzt.

5. Klemmhalter nach einem der Ansprüche 1 bis 4, **dadurch gekennzeichnet, dass** das Mittel (4) ein zweckmäßig gestaltetes Element ist, dessen den Vorkehrungen (3) gegenüberliegende Klemmfläche (4b) ebenflächig ausgebildet ist.

## Claims

1. Clamp-type holder for flexible leads, especially current-carrying leads, consisting of a lead-holder (1) having at least one device (3) fixing a lead (2) and of a means (4) clamping the lead (2) in the device (3), the means (4) and the lead-holder (1) each having at least one respective through-opening (1a; 4a) aligned with each other, **characterised in that** a resilient, longitudinally extensible clamping means (5) known per se with a neck-like cross-sectional constriction (5a) is pulled into the through-openings and connects the lead-holder (1) with the means (4) to allow passage of air.

2. Clamp-type holder according to claim 1, **characterised in that** the device (3) is a groove facing in the laying direction of the lead (2).

3. Clamp-type holder according to claim 1, **characterised in that** the means (4) is an element of plate-like construction.

4. Clamp-type holder according to claim 1, **characterised in that** the means (4) is an element of rectangular construction which has an anti-rotation lug.

5. Clamp-type holder according to any one of claims 1 to 4, **characterised in that** the means (4) is a suitably configured element, the clamping face (4b) of which opposing the devices (3) is of flat construction.

## Revendications

1. Support de serrage pour conduites flexibles, en particulier pour conduites conductrices de courant, constitué d'un support de conduite (1) avec au moins un dispositif (3) fixant une conduite (2) et d'un moyen (4) serrant la conduite (2) dans le dispositif (3), moyennant quoi le moyen (4) et le support de conduite (1) comportent chacun au moins un passage (1a; 4a) aligné sur l'autre, **caractérisé en ce qu'**un moyen de serrage (5) élastique, extensible longitudinalement, connu en soi, avec un rétrécissement de section (5a) en forme de col, qui raccorde, de manière desserrable, le support de conduite (1) au moyen (4), est tendu dans les passages (1a; 4a).

2. Support de serrage selon la revendication 1, **caractérisé en ce que** le dispositif (3) est une rainure orientée dans le sens de pose de la conduite (2).

3. Support de serrage selon la revendication 1, **caractérisé en ce que** le moyen (4) est un élément formé comme un plateau.

4. Support de serrage selon la revendication 1, **caractérisé en ce que** le moyen (4) est un élément rectangulaire qui comporte un collier de fixation formé pour résister à la torsion.

5. Support de serrage selon l'une quelconque des revendications 1 à 4, **caractérisé en ce que** le moyen (4) est un élément conçu de manière appropriée dont la surface de serrage (4b) opposée aux dispositifs (3) est conçue avec une surface plane.
